# FASCICULE DE BREVET EUROPEEN

(11) **EP 3 994 509 B1**
(45) Date de publication et mention de la délivrance du brevet: **12.11.2025**
(21) Numéro de dépôt: 20745103.0
(22) Date de dépôt: 03.07.2020
(51) Int. Cl.: G02B 6/14, G02B 6/122, G02B 6/12

(54) **ASSEMBLAGE D'UN COMPOSANT SEMI-CONDUCTEUR ACTIF ET D'UN COMPOSANT OPTIQUE PASSIF À BASE DE SILICIUM**
ANORDNUNG EINER AKTIVEN HALBLEITERBAUELEMENTS UND EINES PASSIVEN OPTISCHEN BAUTEILS AUF SILIKONBASIS
ASSEMBLY OF AN ACTIVE SEMICONDUCTOR COMPONENT AND OF A PASSIVE SILICON-BASED OPTICAL COMPONENT

(30) Priorité: 05.07.2019 FR 1907521
(43) Date de publication de la demande: 11.05.2022
(73) Titulaire: Almae Technologies, 91460 Marcoussis (FR)
(72) Inventeur: DEBREGEAS, Hélène, 91470 Boullay Les Troux (FR); LELARGE, François, 75012 Paris (FR); CARRARA, David, 91600 Savigny Sur Orge (FR)
(74) Mandataire: Osha BWB
(86) Numéro de dépôt international: PCT/EP2020/068800
(87) Numéro de publication internationale: WO 2021/004930

(56) Documents cités:
- EP-A1- 3 494 424
- WO-A2-2016/077499
- US-A1- 2015 010 266
- US-A1- 2015 247 974
- US-A1- 2018 252 865
- US-A1- 2018 321 445
- US-A1- 2019 089 111
- US-B2- 9 762 334
- ZHIPING ZHOU ET AL: "On-chip light sources for silicon photonics", LIGHT: SCIENCE & APPLICATIONS, vol. 4, no. 11, 20 November 2015 (2015-11-20), pages e358, XP055362361, DOI: 10.1038/lsa.2015.131
- GUANG-HUA DUAN ET AL: "Hybrid III--V on Silicon Lasers for Photonic Integrated Circuits on Silicon", IEEE JOURNAL OF SELECTED TOPICS IN QUANTUM ELECTRONICS, vol. 20, no. 4, 1 July 2014 (2014-07-01), pages 158 - 170, XP055198161, ISSN: 1077-260X, DOI: 10.1109/JSTQE.2013.2296752

## Description

### Domaine technique de l'invention

La présente invention concerne un assemblage d'un composant semi-conducteur actif et d'un composant optique passif à base de silicium, un procédé de fabrication d'un tel un assemblage et un procédé de couplage entre guides d'ondes de composants d'un tel assemblage.

### Etat de la technique

La technologie dite photonique sur silicium, ci-après « SiPho » (pour « Silicon Photonics ») regroupe l'étude et les applications des composants optiques (ci-après « composants SiPho ») qui utilisent le silicium comme milieu de propagation optique. Les composants SiPho peuvent être fabriqués en utilisant les technologies de fabrication des semi-conducteurs et, comme le silicium est utilisé comme substrat dans la plupart des circuits intégrés, il est possible de créer des dispositifs hybrides dans lesquels les composants optiques et électroniques sont intégrés sur un même substrat, ce qui rend la technologie SiPho particulièrement attractive. Notamment, les composants SiPho sont utilisés dans des applications multiples, telles que les guides d'ondes passifs, les photodiodes, ou encore les modulateurs. Les composants SiPho ont ainsi pour composant principal le silicium et peuvent comprendre également et de façon non limitative des oxydes de silicium (SiO₂), des nitrures de silicium (SiN, Si₂N₃, Si₂N, Si₃N₄), des oxynitrures de silicium (SiON).

Du fait de la nature des matériaux utilisés (semi-conducteurs à gap indirect), la technologie SiPho ne permet pas cependant de générer des fonctions actives, comme une amplification optique par exemple. On cherche donc à intégrer, sur des circuits SiPho, des composants semi-conducteurs actifs, c'est-à-dire capables de générer une modification d'une propriété optique d'un faisceau lumineux lorsqu'ils sont soumis à une source de courant ou de tension. Les composants semi-conducteurs actifs comprennent par exemple des matériaux susceptibles de générer du gain optique, par exemple des cristaux semiconducteurs épitaxiés sur des substrats, tels que l'arséniure de gallium (GaAs), le nitrure de gallium (GaN), ou le phosphure d'indium (InP).

Une difficulté néanmoins est le taux de couplage optique entre les guides d'ondes réalisés au moyen de ces deux technologies (SiPho et composants actifs) avec des pertes de couplage minimales et à faible coût. En effet, en fonction des matériaux constituant les composants, les modes optiques qui se propagent dans les guides d'ondes ont des géométries différentes, ce qui complique le couplage. Ainsi par exemple, la géométrie d'un mode dans un guide d'onde Si est typiquement de 0,7 x 0,7 µm² ; elle est typiquement de 1 x 1,3 µm² dans un guide d'ondes sur substrat InP et de plus de de 4 x 4 µm² dans un guide d'ondes SiO₂.

Une première approche est le couplage direct entre les guides d'ondes (ou « *butt coupling* » selon l'expression anglosaxonne). Pour essayer d'augmenter le recouvrement entre les modes et réduire les pertes de couplage, il est connu d'implémenter des convertisseurs de taille de modes sur les deux guides d'ondes (voir par exemple *Janiak et al.* [Réf 1] et *Hirohito* [Réf 2]). Afin de limiter les degrés de liberté d'alignement qui sont au nombre de 6 (3 translations et 3 rotations), la plupart des solutions impliquent le montage des deux composants retournés l'un par rapport à l'autre sur un substrat commun (montage « flip-chip »). L'alignement vertical est alors assuré par la présence de points d'appui à hauteur déterminée, et l'alignement horizontal est assuré par des équipements d'alignement spécifiques à haute précision (environ 1 µm). On atteint alors dans le cas optimal des pertes de couplage de -2dB.

Cependant, ce type de couplage présente une tolérance d'alignement très faible, en raison de la désadaptation des modes, avec typiquement 3dB de pertes de couplage supplémentaires pour 1µm de désalignement.

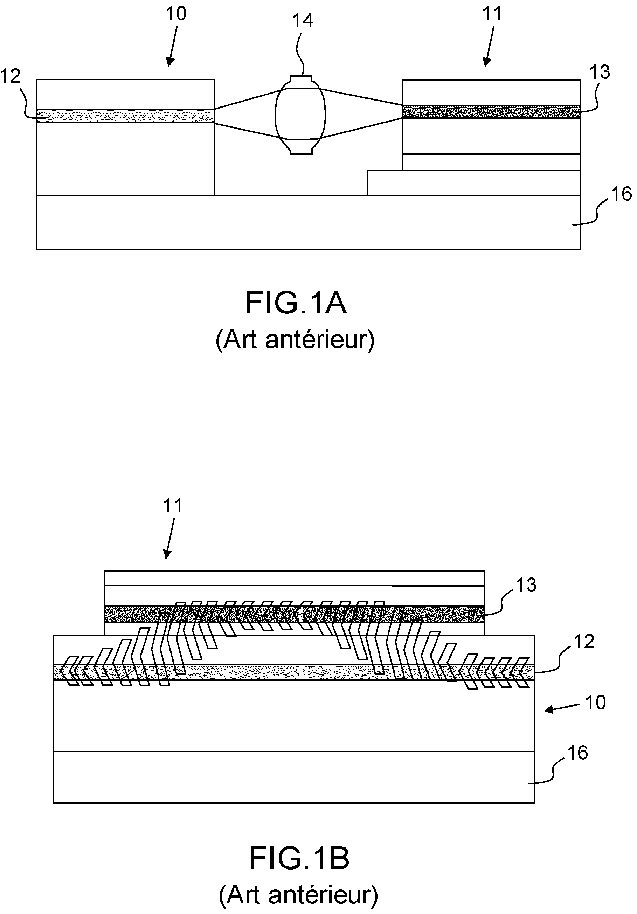

Pour surmonter ces limitations, des solutions alternatives ont été proposées, au prix d'un coût beaucoup plus élevé, avec l'utilisation de dispositifs optiques placés dans l'espace libre situé entre les guides d'ondes à coupler pour atténuer la désadaptation des modes. Voir par exemple *Gao et al.* [Réf 3]. La FIG. 1A illustre ainsi un exemple de couplage direct entre un composant SiPho 10 comprenant un guide d'onde 12 (par exemple Si, SiN ou SiON dans SiO2) et un composant semi-conducteur actif 11 comprenant un guide d'onde 13 que l'on cherche à coupler optiquement avec le guide d'onde 12. Les deux composants sont assemblés sur un élément de base 16, par exemple en silicium. Dans cet exemple, un dispositif optique 14, par exemple une lentille, facilite le couplage dans le cas d'une différence de taille de modes optiques trop importante entre les deux guides d'ondes. Bien qu'efficaces, ces technologies nécessitent des équipements coûteux et des temps d'alignement très longs et précis, ce qui limite leur utilisation.

Une deuxième approche, dénommée « intégration hybride III V sur silicium », est basée sur le couplage évanescent entre les guides d'ondes des deux composants. Un tel type de couplage est illustré de façon schématique sur la FIG. 1B. Dans cet exemple, le composant SiPho comprenant le guide d'onde 12 est réalisé sur la plaque de base en Silicium 16 puis des couches de matériaux semi-conducteurs actifs sont agencées sur le composant SiPho 10 par des techniques de collage, par exemple par liaison moléculaire, par épitaxie directe ou par une interface polymère, pour former le composant semi-conducteur 11. Le guide d'ondes 13 est ensuite défini dans l'empilement de couches en matériaux semi-conducteur par lithographie. La précision de l'alignement entre les guides d'ondes 12, 13 obtenue par cette méthode est d'environ 0.2µm (voir par exemple *Duan et al.* [Réf 4] ou la demande de brevet publiée US2013195137 [Réf 5]). La méthode ainsi décrite d'obtention des guides d'ondes semi-conducteurs actifs alignés de façon très précise avec les guides d'ondes SiPho permet d'assurer un couplage évanescent entre les guides d'ondes, ce qui limite les pertes de couplage même si les tailles des modes sont différentes. Par ailleurs, le matériau actif peut être positionné partout où cela est nécessaire.

Toutefois, les techniques de couplage évanescent entre guides d'ondes dans les technologies connues d'intégration hybride III V sur silicium, nécessitent une technologie hybride complexe et spécifique qui n'est pas encore mature. Notamment, ces techniques présentent des problèmes de rendement et de fiabilité, ainsi qu'une reproductibilité limitée notamment du fait de l'étape nécessaire de collage entre le composant SiPho et les couches en matériaux semi-conducteurs. Ainsi, aujourd'hui, très peu de laboratoires ont-ils la capacité de développer cette approche et encore moins de démontrer la faisabilité d'un dispositif industriel.

La demande de brevet WO2016077499 [Réf. 7] décrit des techniques de couplage évanescent entre guides d'ondes pour le couplage d'un circuit intégré SiPho vers une fibre optique ou inversement. Cependant, comme dans [Réf.4] et [Réf. 5], les composants semi-conducteurs actifs sont couplés aux guides d'onde en silicium du circuit intégré SiPho par collage (« *wafer bonding* »).

Un objectif de la présente description est de proposer une nouvelle méthode de couplage basée sur le couplage évanescent entre des composants SiPho et semi-conducteurs préalablement conçus à cette fin, offrant ainsi, par rapport aux méthodes connues, une meilleure fiabilité et une plus grande simplicité dans le procédé.

### Résumé de l'invention

Selon un premier aspect, la présente description concerne un assemblage d'un composant semi-conducteur actif et d'un composant optique passif à base de silicium, ledit assemblage étant configuré pour le couplage de guides d'ondes formés respectivement dans lesdits composant semi-conducteur actif et composant optique passif.

Un assemblage selon le premier aspect est décrit dans la revendication 1 et comprend un support, ledit composant semi-conducteur actif et ledit composant optique passif à base de silicium agencés sur ledit support.

Selon la présente description, ledit composant semi-conducteur actif comprend :
un premier ensemble de couches en matériaux semi-conducteurs comprenant au moins un premier guide d'ondes configuré pour guider dans une première section de l'assemblage, au moins un premier mode optique;
un deuxième ensemble de couches en matériaux semi-conducteurs, superposé et en contact avec ledit premier ensemble de couches et comprenant au moins un deuxième guide d'ondes configuré pour guider au moins un deuxième mode optique.

Par ailleurs, selon la présente description,
au moins une partie desdites couches du premier ensemble de couches et du deuxième ensemble de couches sont dopées pour former dans une première région du composant semi-conducteur actif une diode de type PIN ;
ledit au moins un premier guide d'onde et ledit au moins un deuxième guide d'ondes sont configurés pour permettre un couplage évanescent entre eux dans une deuxième section de l'assemblage ; et
ledit premier ensemble de couches est gravé pour former dans une deuxième région du composant semi-conducteur actif une première surface affleurant ledit au moins un deuxième guide d'ondes.

Selon la présente description, ledit composant optique passif à base de silicium dudit assemblage comprend :
un substrat ;
un ensemble de couches en matériaux composés du silicium formé dans une première région du substrat et comprenant au moins un guide d'ondes configuré pour guider au moins un mode optique, ledit au moins un guide d'onde affleurant une première surface dudit ensemble de couches opposée à une deuxième surface dudit ensemble de couches en contact avec une surface du substrat.

Dans l'assemblage selon le premier aspect, ladite première surface du composant optique passif est en contact avec ladite première surface du composant semi-conducteur actif pour permettre un couplage évanescent entre ledit au moins un guide d'onde du composant optique passif et ledit au moins un deuxième guide d'onde dudit composant semi-conducteur actif.

Par « affleurant », on entend dans la présente description qu'une distance entre ledit au moins un deuxième guide d'ondes et ladite première surface du composant semi-conducteur actif d'une part, et une distance entre ledit au moins un guide d'ondes et ladite première surface du composant optique passif d'autre part, est suffisamment faible pour permettre un couplage évanescent entre le deuxième guide d'onde du composant semi-conducteur actif et le guide d'onde du composant optique passif après assemblage ; autrement dit, il y a, en opération, un transfert dudit au moins un deuxième mode optique se propageant dans ledit au moins un deuxième guide d'onde du composant semi-conducteur actif, dans ledit au moins un guide d'onde du composant optique passif. Cette distance dépend de la géométrie des guides d'ondes et des indices de réfraction des matériaux utilisés pour former les guides d'ondes. Selon un ou plusieurs exemples de réalisation, ladite distance est comprise entre 0 et environ 1 µm, par exemple entre 0 et environ 500 nm.

Dans un assemblage selon la présente description, le composant semi-conducteur actif peut être conçu et testé avant assemblage avec le composant optique passif. Il permet une très bonne qualité de couplage avec un composant SiPho au moyen de deux couplages évanescents, d'une part entre le premier guide d'onde qui propage le mode optique généré dans la région active du composant semi-conducteur actif et un guide d'onde intermédiaire (le deuxième guide d'onde) et d'autre part entre le guide d'onde intermédiaire et le guide d'onde du composant SiPho, même si les modes optiques sont de tailles différentes.

Selon un ou plusieurs exemples de réalisation, lesdits matériaux semi-conducteurs du composant semi-conducteur actif comprennent des matériaux semi-conducteurs III-V, par exemple GaAs, InP, GaN, des dérivés ternaires, par exemple InGaAs, InAlAs, InGaP, InGaN, ou des dérivés quaternaires, par exemple InGaAsP, InGaAlAs.

Selon un ou plusieurs exemples de réalisation, les couches en matériaux semi-conducteurs du premier ensemble de couches du composant semi-conducteur actif sont configurées pour générer une ou plusieurs fonctions optiques choisies parmi : l'amplification optique, l'émission laser, la modulation de phase, la modulation à électro-absorption, la photodétection.

Dans le cas d'amplification optique et émission laser, le premier guide d'onde pourra comprendre un matériau semi-conducteur à gain optique et le composant semi-conducteur actif configuré pour une injection en courant dudit premier guide d'onde. En fonction des fonctions optiques (photodétection, modulation, amplification, émission) générées par le composant semi-conducteur actif et le composant optique passif, le sens de propagation de la lumière se fera soit depuis le composant semi-conducteur actif vers le composant optique passif ou depuis le composant optique passif vers le composant semi-conducteur actif.

Les matériaux semiconducteur III V permettant la génération de ces fonctions optiques (en dehors de la modulation de phase) présentent généralement de fortes pertes de propagation optiques (supérieures à 20db/cm) à la longueur d'onde de propagation et sont ainsi qualifiés d'absorbant.

Selon un ou plusieurs exemples de réalisation, les géométries respectives desdits au moins un premier guide d'onde et au moins un deuxième guide d'onde du composant semi-conducteur actif sont configurées de telle sorte qu'un indice effectif dudit au moins un premier mode optique soit strictement supérieur à un indice effectif dudit au moins un deuxième mode optique dans la première section de l'assemblage et que ledit indice effectif dudit au moins un premier mode optique devienne strictement inférieur à l'indice effectif dudit au moins un deuxième mode optique dans la deuxième section de l'assemblage.

Cette inversion de l'indice effectif des modes optiques permet le transfert par couplage évanescent du mode optique se propageant dans ledit au moins un premier guide d'onde dans ledit au moins un deuxième guide d'ondes du composant semi-conducteur actif.

Selon un ou plusieurs exemples de réalisation, lesdits au moins un premier guide d'onde et deuxième guide d'onde du composant semi-conducteur actif présentent des largeurs variables dans le sens de propagation de la lumière.

Selon la présente description,, le premier guide d'onde du composant semi-conducteur actif est formé en un matériau semi-conducteur choisi parmi les dérivés ternaires ou quaternaires du GaAs, de l'InP ou du GaN et préférentiellement en InGaP, InGaAsP ou InGaAlAs éventuellement sous forme de multi-puits quantiques, enterré dans de l'InP.

Selon la présente description,, le deuxième guide d'onde du composant semi-conducteur actif est formé en un matériau semi-conducteur choisi parmi les dérivés ternaires ou quaternaires du GaAs, de l'InP ou du GaN et préférentiellement en InGaAsP massif transparent à la longueur d'onde de propagation, enterré dans de l'InP.

La transparence du matériau est caractérisée dans la présente description par des faibles pertes à la longueur d'onde de propagation, par exemple inférieures à 10db/cm. Avec un matériau transparent pour le deuxième guide d'onde du composant semi-conducteur actif, la déposante a montré que les pertes de propagation dans le composant semi-conducteur actif peuvent être réduites de façon substantielle, par exemple d'un facteur 2 par rapport à un cas où le matériau pour le deuxième guide d'onde du composant semi-conducteur actif est absorbant et présente des pertes à la longueur d'onde de propagation supérieures à 20db/cm.

Selon un ou plusieurs exemples de réalisation, ledit premier ensemble de couches du composant semi-conducteur actif comprend une première couche en matériau semi-conducteur agencée entre une deuxième couche en matériau semi-conducteur et une troisième couche en matériau semi-conducteur d'indices de réfaction plus faibles que l'indice de réfraction de la première couche en matériau semi-conducteur, ladite première couche formant ledit au moins un premier guide d'onde.

Selon un ou plusieurs exemples de réalisation, ledit deuxième ensemble de couches du composant semi-conducteur actif comprend une quatrième couche en matériau semi-conducteur agencée entre ladite troisième couche dudit premier ensemble de couches et une cinquième couche en matériau semi-conducteur, lesdites troisième et cinquième couches présentant des indices de réfaction plus faibles que l'indice de réfraction de la quatrième couche en matériau semi-conducteur, ladite quatrième couche formant ledit au moins un deuxième guide d'onde.

Selon un ou plusieurs exemples de réalisation, une couche du deuxième ensemble de couches du composant semi-conducteur actif forme un substrat du composant semi-conducteur actif.

Selon un ou plusieurs exemples de réalisation, ledit substrat du composant semi-conducteur actif présente une épaisseur comprise entre environ 200 µm et environ 1 mm.

Selon un ou plusieurs exemples de réalisation, ledit substrat du composant semi-conducteur actif est formé dans un matériau semi-conducteur avec une maille cristalline de même taille que celle du matériau agencé en contact, par exemple un matériau semi-conducteur III-V binaire, par exemple InP, GaAs, GaSb.

Selon un ou plusieurs exemples de réalisation, ledit composant semi-conducteur actif comprend une pluralité de N premiers guides d'ondes disposés parallèlement, et autant de deuxièmes guides d'ondes, chaque deuxième guide d'onde étant couplé à un premier guide d'onde par couplage évanescent dans la deuxième section de l'assemblage.

Selon un ou plusieurs exemples de réalisation, ledit composant semi-conducteur actif comprend en outre un ou plusieurs guides d'ondes additionnelles agencés en série avec le ou les premier(s) guide(s) d'ondes. Les guides d'ondes additionnels peuvent permettre de réaliser diverses fonctionnalités, comme par exemple un guide laser en amont d'un premier guide d'ondes formant un modulateur à électro-absorption. Seul le ou les premier(s) guide(s) d'onde sont couplé(s) au(x) deuxième(s) guide(s) d'ondes par couplage évanescent dans la deuxième section du composant.

Selon un ou plusieurs exemples de réalisation, le substrat du composant optique passif est en silicium.

Selon un ou plusieurs exemples de réalisation, le substrat du composant optique passif forme le support de l'assemblage.

Selon un ou plusieurs exemples de réalisation, le substrat du composant optique passif comprend une première région sur laquelle est agencé ledit ensemble de couches du composant optique passif et une deuxième région sur laquelle est agencé au moins un plot de contact électrique; ledit composant semi-conducteur actif comprend au moins un plot de contact électrique en contact avec ledit premier ensemble de couches en matériau semi-conducteur ; et ledit composant semi-conducteur actif est fixé sur ledit substrat du composant optique passif de telle sorte que ledit plot de contact électrique du composant passif soit en contact avec ledit plot de contact électrique du composant semi-conducteur actif.

Selon un ou plusieurs exemples de réalisation, lesdits plots de contact électriques sont de plots métalliques collés ou soudés pour assurer la fixation de l'assemblage. Lesdits plots métalliques peuvent en outre assurer l'alimentation électrique du composant semi-conducteur actif.

L'assemblage ainsi réalisé, qui met en œuvre un double couplage évanescent grâce à la présence du ou des deuxièmes guide(s) d'ondes comme guides d'ondes intermédiaires, offre les avantages du couplage évanescent, à savoir un couplage efficace même si les modes optiques sont de tailles différentes, tolérant aux désalignements en x et y, et extrêmement tolérant à la direction z. Il offre aussi les avantages du couplage direct avec un procédé de fabrication standard et une dissipation thermique efficace du composant semi-conducteur actif fixé sur le substrat silicium, par exemple par soudure.

Selon un ou plusieurs exemples de réalisation, ledit ensemble de couches du composant optique passif comprend une première couche en matériau composé du silicium agencée entre une deuxième couche et une troisième couche en matériaux composés du silicium, d'indices de réfaction plus faibles que l'indice de réfraction de la première couche, ladite première couche formant ledit au moins un guide d'onde du composant optique passif. Les plaquettes ou « wafers » dites SOI (pour « *Silicon On Insulator* ») que l'on utilise couramment dans la microélectronique Silicium et la Photonique sur Silicium sont un exemple d'ensemble de couches qui peuvent être utilisées pour réaliser le composant optique passif.

Selon un ou plusieurs exemples de réalisation, lesdites deuxième et troisième couches sont formées en oxyde silicium (SiO₂).

Selon un ou plusieurs exemples de réalisation, ladite première couche formant ledit au moins un guide d'onde du composant optique passif comprend un matériau choisi parmi SiO2 dopé, SiN, SiON, Si, dérivés du Si, ayant un indice optique plus grand que lesdites deuxième et troisième couches pour assurer un guidage optique.

Selon un ou plusieurs exemples de réalisation, la géométrie dudit au moins un guide d'ondes du composant optique passif est configurée pour présenter un indice effectif dudit au moins un mode optique se propageant dans ledit au moins un guide d'onde croissant dans le sens de propagation pour permettre le transfert par couplage évanescent dudit au moins un mode optique dans ledit au moins un deuxième guide d'onde du composant semi-conducteur actif, après assemblage.

En pratique, on observera une inversion de l'indice effectif des modes optiques se propageant respectivement dans ledit au moins un guide d'onde du composant optique passif et ledit au moins un deuxième guide d'onde du composant semi-conducteur actif pour permettre le transfert par couplage évanescent dudit au moins un mode optique du composant optique passif dans ledit au moins un deuxième guide d'onde du composant semi-conducteur actif.

Selon un ou plusieurs exemples de réalisation, le composant optique passif à base de silicium comprend au moins l'une des fonctions suivantes : multiplexage en longueur d'onde, multiplexage en polarisation, filtrage, modulation, photodétection, combinaison ou division de faisceau, routage, et autres fonctionnalités propices à l'utilisation des circuits Photonique sur Silicium (SiPho) connus de l'état de l'art. Selon un ou plusieurs exemples de réalisation, ledit assemblage comprend une pluralité de N guides d'ondes dans le composant optique passif et autant de premiers guides d'ondes et de deuxièmes guides d'ondes dans le composant semi-conducteur actif, N étant supérieur ou égal à 2, par exemple N compris entre 2 et 20. En opération, chaque premier guide d'onde du composant semi-conducteur actif est couplé, par couplage évanescent, avec un deuxième guide d'onde du composant semi-conducteur actif, ledit deuxième guide d'onde du composant semi-conducteur actif étant couplé, par couplage évanescent, avec un guide d'onde du composant optique passif.

Selon un deuxième aspect, la présente description concerne un procédé de couplage entre guides d'ondes dans un assemblage selon le premier aspect, le procédé comprenant :
dans ladite première section de l'assemblage, la propagation d'au moins un mode optique dans ledit au moins un premier guide d'onde du composant semi-conducteur actif ;
dans ladite deuxième section de l'assemblage, le transfert, par couplage évanescent, dudit au moins un mode optique dans ledit au moins un deuxième guide d'onde du composant semi-conducteur actif;
dans une troisième section de l'assemblage, la propagation dudit au moins un mode optique dans ledit au moins un deuxième guide d'onde du composant semi-conducteur actif ;
dans une quatrième section de l'assemblage, le transfert, par couplage évanescent, dudit au moins un mode optique dans ledit au moins un guide d'onde du composant passif ;
dans une cinquième section de l'assemblage, la propagation dudit au moins un mode optique dans ledit au moins un guide d'onde du composant passif.

Selon un troisième aspect, la présente description concerne un procédé de fabrication d'un assemblage selon le premier aspect, le procédé comprenant :
la fourniture dudit composant semi-conducteur actif;
la fourniture dudit composant passif à base de silicium;
l'assemblage dudit composant semi-conducteur actif et dudit composant passif par mise en contact de ladite première surface dudit ensemble de couches du composant passif avec ladite première surface du composant semi-conducteur actif.

Selon un ou plusieurs exemples de réalisation, le substrat dudit composant passif comprend une première région sur laquelle est agencé ledit ensemble de couches et une deuxième région sur laquelle est agencé au moins un plot de contact électrique; le composant semi-conducteur actif comprend au moins un plot de contact électrique en contact avec ledit premier ensemble de couches en matériau semi-conducteur ; et l'assemblage dudit composant semi-conducteur actif et dudit composant passif comprend la mise en contact dudit plot de contact électrique du composant optique passif et dudit plot de contact électrique du composant semi-conducteur actif.

Selon un ou plusieurs exemples de réalisation, lesdits plots de contact électriques du composant optique passif et du composant semi-conducteur actif sont des plots métalliques et l'assemblage comprend la fixation dudit composant semi-conducteur actif et dudit composant passif par soudure ou collage desdits plots.

### Brève description des figures

D'autres avantages et caractéristiques de l'invention apparaîtront à la lecture de la description, illustrée par les figures suivantes :
[Fig. 1A], déjà décrite, représente un schéma illustrant le couplage direct entre un composant semi-conducteur actif et un composant à base de silicium (SiPho), selon l'art antérieur ;
[Fig. 1B], déjà décrite, représente un schéma illustrant le couplage évanescent entre un composant semi-conducteur actif et un composant à base de silicium (SiPho), selon l'art antérieur ;
[Fig. 2A] représente un schéma d'un composant semi-conducteur actif selon un exemple de la présente description, dans une vue en perspective cavalière ;
[Fig. 2B] représente un schéma du composant semi-conducteur actif représenté sur la Fig. 2A, selon une coupe (coupe AA) ;
[Fig. 2C] représente un schéma du composant semi-conducteur actif représenté sur la Fig. 2A, selon une coupe (coupe BB) ;
[Fig. 2D] représente un schéma du composant semi-conducteur actif représenté sur la Fig. 2A, selon une coupe (coupe CC) ;
[Fig. 2E] représente un schéma du composant semi-conducteur actif représenté sur la Fig. 2A, selon une coupe (coupe DD) ;
[Fig. 3A] représente un schéma d'un composant passif à base de silicium (SiPho) selon un exemple de la présente description, dans une vue en perspective cavalière ;
[Fig. 3B] représente un schéma du composant passif à base de silicium représenté sur la Fig. 3A, selon une coupe (coupe AA) ;
[Fig. 3C] représente un schéma du composant passif à base de silicium représenté sur la Fig. 3A, selon une coupe (coupe BB) ;
[Fig. 3D] représente un schéma du composant passif à base de silicium représenté sur la Fig. 3A, selon une coupe (coupe CC) ;
[Fig. 4A] représente un schéma illustrant un assemblage d'un composant semi-conducteur actif tel qu'illustré sur la Fig. 2A avec un composant passif tel qu'illustré sur la Fig. 3A, selon une vue en coupe, et une représentation schématique de la propagation optique dans différentes sections de l'assemblage ;
[Fig. 4B] représente un schéma illustrant l'évolution des indices effectifs de modes se propageant dans les différents guides d'ondes en fonction des différentes sections de l'assemblage représenté sur la Fig. 5A ;
[Fig. 5] illustre par des schémas des étapes de fabrication d'un composant semi-conducteur actif selon un exemple de la présente description ;
[Fig. 6A] représente un schéma montrant les dopages dans un semi-conducteur actif selon un exemple de réalisation de la présente description ;
[Fig. 6B] représente un schéma montrant les dopages dans un semi-conducteur actif selon un exemple de réalisation de la présente description ;
[Fig. 6C] représente un schéma montrant les dopages dans un semi-conducteur actif selon un exemple de réalisation de la présente description ;
[Fig. 7] illustre par des schémas des étapes de fabrication d'un composant passif à base de silicium selon un exemple de la présente description ;
[Fig. 8] représente un schéma d'un assemblage selon un exemple de réalisation de la présente description.

### Description détaillée de l'invention

Sur les figures, les éléments ne sont pas représentés à l'échelle pour une meilleure visibilité. En particulier les axes horizontaux et verticaux sont représentés à des échelles différentes pour une meilleure visibilité. Également sur chacun des axes verticaux et horizontaux, les hauteurs et respectivement les largeurs des différentes structures et couches peuvent être considérablement différents, notamment suivant les spécificités et contraintes de mise en œuvre.

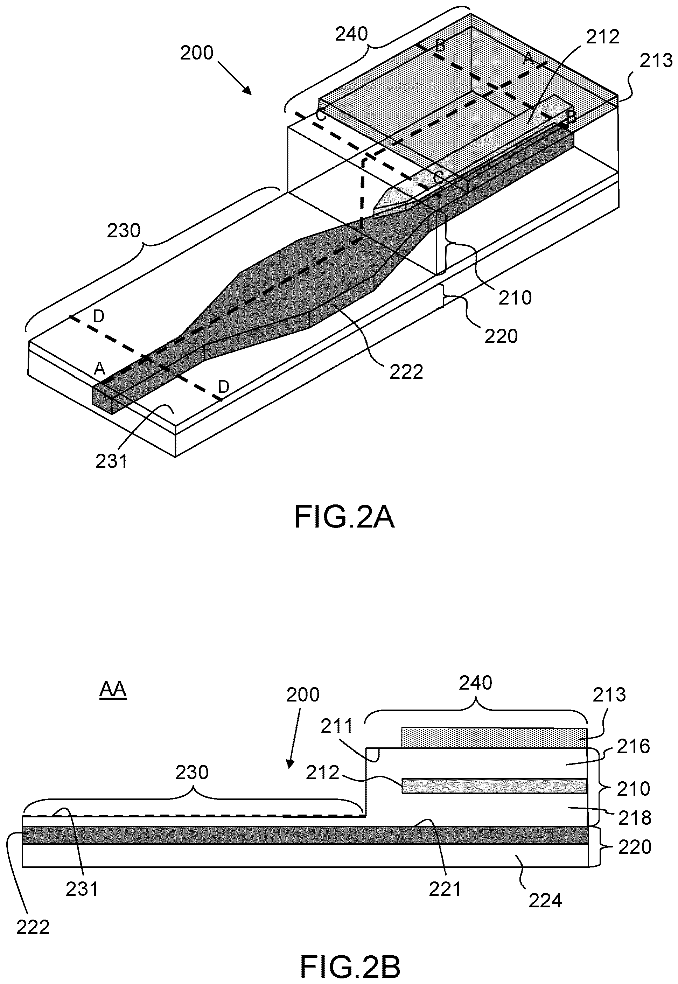

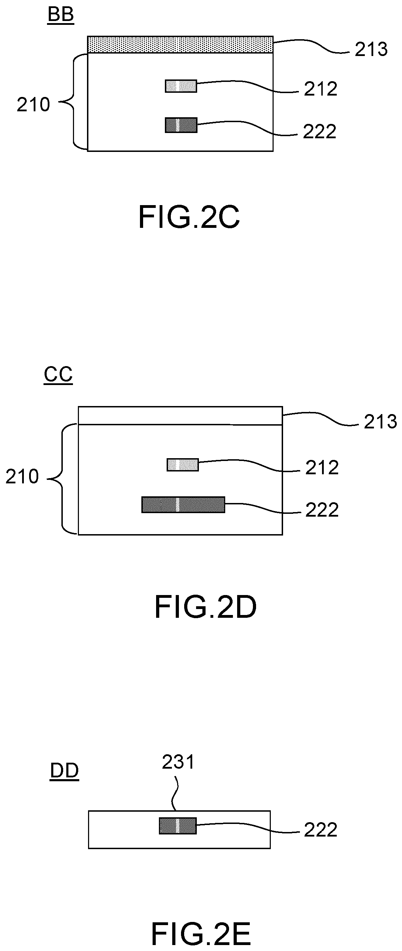

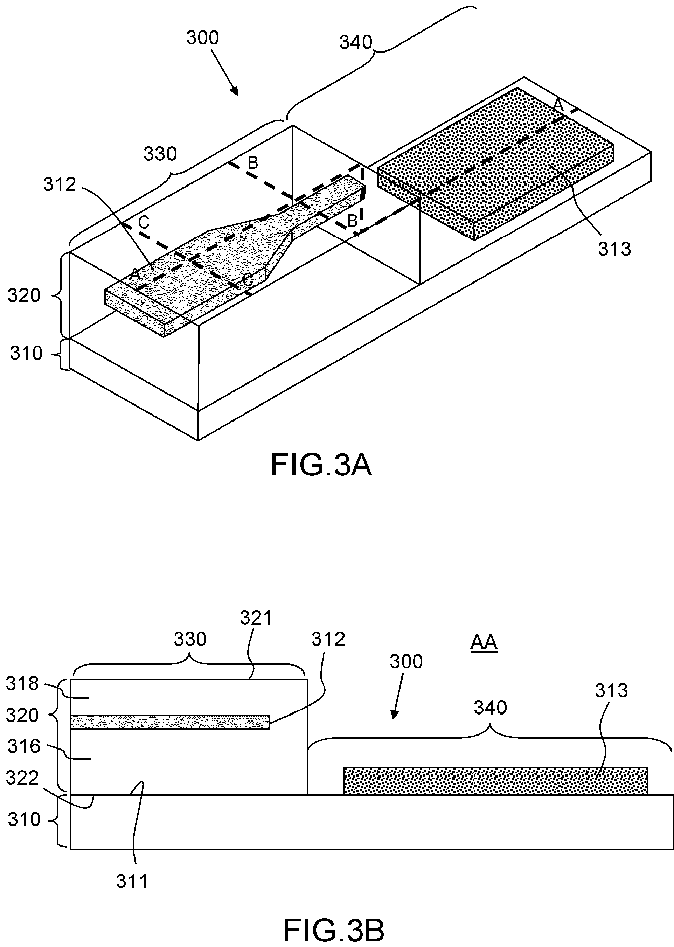

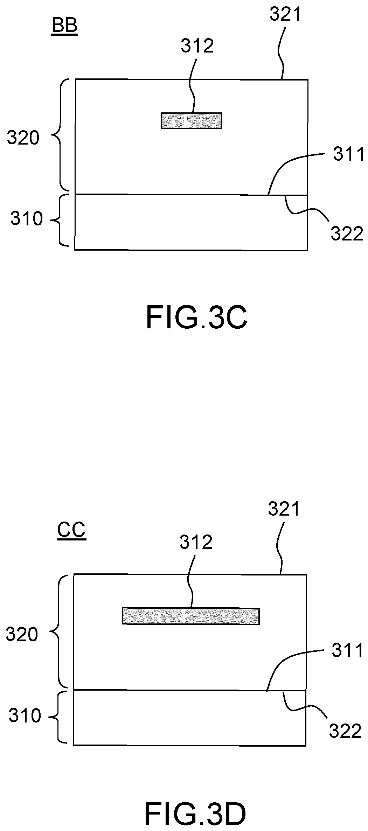

Les FIGS. 2A à 2E représentent un exemple de composant semi-conducteur actif 200 configuré pour l'assemblage avec un composant optique passif à base de silicium, par exemple un composant 300 tel que décrit sur les FIGS. 3A - 3D.

Le composant semi-conducteur actif 200 comprend dans cet exemple un premier ensemble de couches 210 en matériaux semi-conducteurs comprenant au moins un premier guide d'ondes 212 configuré pour guider au moins un premier mode optique, par exemple un mode optique généré dans une région à gain du composant actif 200.

Le composant semi-conducteur actif 200 comprend par ailleurs un deuxième ensemble de couches 220 en contact avec le premier ensemble de couches 210. Le deuxième ensemble de couches 220 comprend au moins un deuxième guide d'ondes 222 configuré pour guider au moins un deuxième mode optique. Le deuxième ensemble de couches peut comprendre un substrat 224, par exemple un substrat en InP.

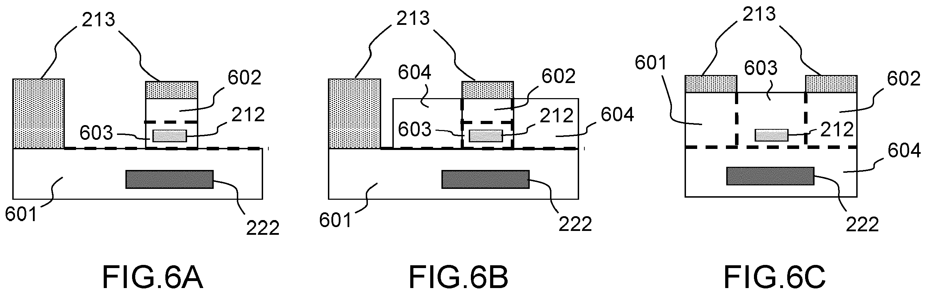

Comme cela sera expliqué plus en détails par la suite au moyen des FIGS. 6A - 6C, au moins une partie des couches des premier et deuxième ensembles de couches sont configurées pour former une diode de type PIN, dans une région 240 du composant, au moyen de contacts schématisés de façon simplifiée par un plot de contact électrique 213 en contact avec une surface 211 du premier ensemble de couches 210.

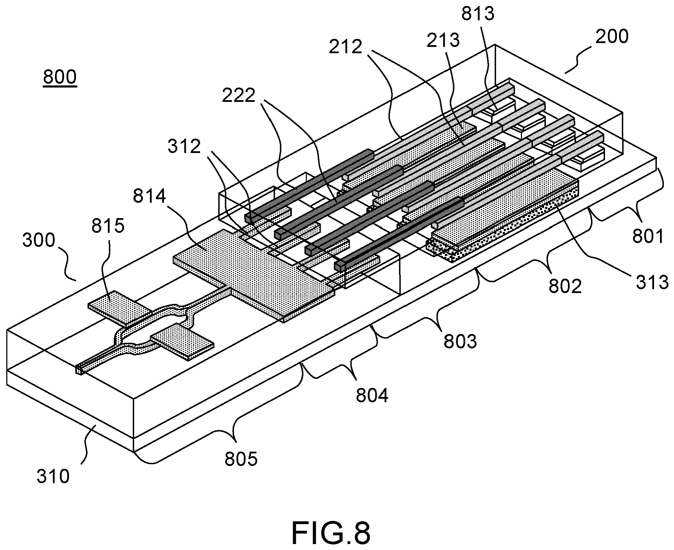

Dans l'exemple des FIGS. 2A - 2E un seul premier guide d'onde 212 et un seul deuxième guide d'onde 222 sont représentés ; en pratique, comme cela sera illustré par la suite dans un exemple de réalisation (voir FIG. 8), il peut y avoir plusieurs premiers guides d'ondes agencés en parallèle et autant de deuxièmes guides d'ondes configurés pour guider en parallèle une pluralité de modes optiques.

Le premier guide d'onde 212 et le deuxième guide d'ondes 222 sont configurés pour permettre, en fonctionnement, un transfert par couplage évanescent d'un mode optique se propageant dans le premier guide d'onde 212 vers le deuxième guide d'onde 222.

Par ailleurs, comme cela est visible sur les FIGS. 2A -2B, le premier ensemble de couches 210 est gravé pour former dans une région 230 du composant 200 une première surface 231 affleurant le deuxième guide d'ondes 222. La première surface 231 est configurée pour être mise en contact avec une surface du composant optique passif pour le transfert par couplage évanescent d'un mode optique se propageant dans le deuxième guide d'onde dans un guide d'onde du composant optique passif, comme cela sera expliqué plus en détails par la suite.

Par exemple, et de façon non limitative, le premier guide d'ondes 212 est formé d'une couche en matériau semi-conducteur quaternaire, par exemple en InGaAsP massif avec une photoluminescence de 1,1 µm, encapsulée entre deux couches 216, 218 en InP pour former, dans la région à gain optique, un laser InP.

Le composant semi-conducteur actif selon la présente description peut être configuré pour présenter une fonction d'amplification optique ou d'autres fonctions optiques.

Ainsi, en fonction de la fonction optique recherchée pour le composant actif 200, le premier guide d'ondes 212 peut être en matériau à gain optique (structure verticale du laser) et être alors injecté en courant électrique pour amplifier une onde optique incidente. Il peut également être en matériau transparent ou absorbant à la longueur d'onde de fonctionnement utilisé en général sous tension électrique négative afin de modifier la phase du signal (par exemple modulateur de phase de type Mach-Zehnder, section de laser accordable) ou de l'absorber (photodiode, modulateur à électro-absorption).

Le deuxième guide d'ondes 222 peut comprendre un matériau massif avec une photoluminescence proche de la longueur d'onde de propagation, ou « longueur d'onde opérationnelle » (par exemple environ 1,3 µm pour la bande O et 1,5 µm pour la bande C des télécoms). Avantageusement, le deuxième guide d'onde 222 est transparent à la longueur d'onde de propagation, c'est-à-dire qu'il présente des pertes à ladite longueur d'onde inférieures à environ 10 dB/cm.

Les FIGS. 3A à 3D représentent un exemple de composant passif à base de silicium 300 configuré pour l'assemblage avec un composant semi-conducteur actif, par exemple un composant 200 tel que décrit sur les FIGS. 2A - 2E.

Le composant passif 300 comprend dans cet exemple un substrat 310, par exemple un substrat en silicium, et un ensemble de couches 320 en matériaux composés du silicium, agencé dans cet exemple dans une première région 330 du substrat. L'ensemble de couches 320 comprend au moins un guide d'ondes 312 configuré pour guider au moins un mode optique. Par exemple le guide d'onde 312 est obtenu par encapsulation d'une couche entre deux couches 316, 318 de plus faible indice de réfraction. De multiples combinaisons de matériaux peuvent être utilisées pour la formation de l'ensemble de couches 320, comme par exemple, et de façon non limitative, un guide d'onde Si enterré dans du SiO₂, ou un guide d'onde SiN ou SiO2 dopé enterré dans du SiO₂.

Comme précédemment, dans l'exemple des FIGS. 3A - 3D, un seul guide d'onde 312 est représenté ; en pratique, comme cela sera illustré par la suite dans un exemple de réalisation (voir FIG. 8), il peut y avoir plusieurs guides d'ondes agencés en parallèle pour le couplage avec plusieurs deuxièmes guides d'ondes du composant semi-conducteur actif.

Comme illustré sur les FIGS. 3A - 3D, le guide d'onde 312 affleure une première surface 321 de l'ensemble de couches 320 opposée à une deuxième surface 322 en contact avec une surface 311 du substrat.

La première surface 321 est configurée pour être mise en contact avec la première surface (231, Figs. 2A - 2E) du composant actif pour le couplage évanescent entre le guide d'onde 312 et le deuxième guide d'onde 212 du composant semi-conducteur actif, comme cela sera détaillé par la suite.

Par ailleurs, le composant actif passif comprend dans cet exemple un plot de contact électrique, avantageusement un plot métallique, agencé dans une deuxième région 340 du substrat 310.

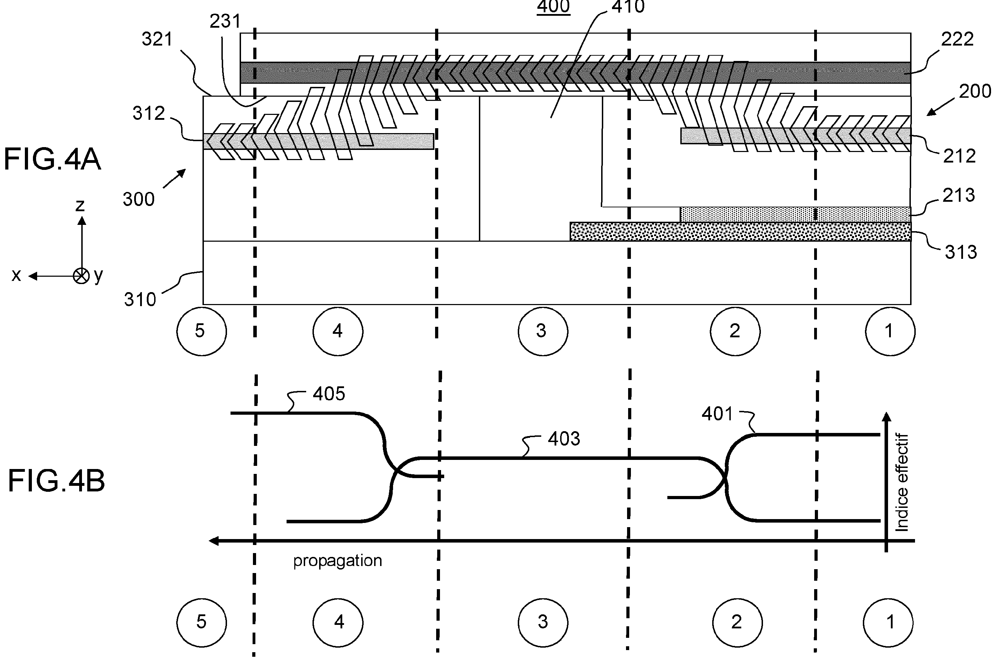

La Fig. 4A représente un schéma illustrant un assemblage 400 d'un composant semi-conducteur actif 200 tel qu'illustré sur les FIGS. 2A - 2E avec un composant passif tel qu'illustré sur les FIGS. 3A - 3D.

Comme illustré sur la FIG. 4A, le composant semi-conducteur actif 200 est retourné et positionné sur le substrat 310 du composant passif 300 qui forme dans cet exemple un support pour l'assemblage 400. Des marques d'alignement ainsi que des butées mécaniques peuvent être implémentées pour l'alignement en x-y des guides d'ondes des composants actif et passif. Lors de l'assemblage et de la phase d'alignement, la première surface 321 de l'ensemble de couches 320 du composant passif 300 est mise en contact avec la première surface 231 du composant actif. Cela permet d'assurer un couplage évanescent entre le deuxième guide d'ondes 222 du composant actif et le guide d'ondes 312 du composant passif.

Une fois l'alignement réalisé et les surfaces 321 et 231 mises en contact, l'assemblage peut être figé à l'aide d'un collage ou d'une soudure entre les plots métalliques sur les deux composants (213, FIG.2A et FIGS. 7A/7B et 313, FIGS. 3A - 3D), selon des méthodes connues. Ces soudures métalliques peuvent également assurer l'alimentation électrique du composant actif 300 et permettent de créer un chemin de dissipation thermique efficace pour le composant semi-conducteur actif.

Une première méthode de soudure utilise comme plots métalliques 313 des billes métalliques comme par exemple de l'or-étain, qui sont soudées avec le contact métallique 213 du composant actif par une compression mécanique et un échauffement au-delà de la température de fusion des billes. Une autre méthode utilise des plots d'or 313 sur lesquels les contacts métalliques 213 du composant actif sont compressés. Quelle que soit la méthode de soudure utilisée, les géométries des deux composants 200 et 300, ainsi que les épaisseurs des plots de soudure et contacts métalliques du composant actif pourront être choisies de telle sorte que l'alignement vertical soit assuré par la mise en contact des surfaces 231 et 321 afin d'assurer le transfert de mode par couplage évanescent.

Pour éviter toute réflexion optique, on peut insérer dans l'espace libre situé dans la section 3 de l'assemblage, entre les composants actif et passif, un milieu d'indice 410 proche de celui du SiO2 (tel que du BCB ou un polymère d'adaptation d'indice par exemple), évitant ainsi une modification abrupte de l'indice effectif à proximité du mode optique se propageant.

Comme illustré sur la FIG. 4A, le couplage évanescent entre le guide d'ondes intermédiaire (deuxième guide d'ondes 222) et le guide d'ondes 312 du composant SiPho 300 s'effectue par contact de surface. Par conséquent, on cherche à agencer les guides d'ondes près de la surface, mais aucun autre alignement vertical avec des épaisseurs de couches d'arrêt spécifiques n'est nécessaire. Cette technique est compatible avec de multiples technologies. Il ouvre la voie à l'alignement passif pour la production de masse à l'aide d'équipements de production standard.

La FIG. 4A illustre un avantage technique de l'assemblage selon la présente description. Dans le cas d'un couplage évanescent selon l'état de l'art, tel que décrit par exemple sur la FIG. 1B, la zone active 13 est collée directement sur le composant passif par-dessus une couche épaisse (environ 2µm) de SiO2. Ce matériau a une très mauvaise conduction thermique, ce qui entraîne une mauvaise dissipation de la chaleur générée sur le composant actif, donc une dégradation des performances (gain, fiabilité en particulier). Dans l'assemblage selon la présente description, la zone de soudure du composant actif 200 est déportée par rapport à la zone de transition de mode par couplage évanescent. On peut ainsi utiliser une soudure métallique standard, apportant une excellente dissipation thermique. Par ailleurs, cette solution est compatible avec n'importe quelle conception de pistes électriques sur le composant passif, en particulier des pistes compatibles pour les transmissions de signaux haute fréquence.

A noter que dans l'exemple de la Fig. 4A, le substrat 310 du composant optique passif 300 forme le support pour l'assemblage. Dans d'autres exemples de réalisation, en fonction des applications, le composant optique passif 300 et le composant actif en matériau semi-conducteur 200 pourront être agencés sur un support indépendant, ce qui peut rendre l'assemblage et l'alignement des composants plus complexes mais la fabrication du composant optique passif plus aisée.

Un procédé de couplage entre le premier guide d'ondes 212 du composant semi-conducteur actif 200 et le guide d'onde 312 du composant passif 300 à base de silicium comprend ainsi dans une première étape la conception et la fabrication des composant semi-conducteur actif et composant passif conformes à la présente description, une conception commune entre les deux composants permettant d'assurer un bon fonctionnement de l'ensemble.

Plus précisément, chacun des composants possédant des couches de matériau dont l'indice de réfraction est connu par l'homme de métier, la conception commune passe par la modification de la géométrie des différents guides d'ondes des deux composants afin de permettre un couplage évanescent et un transfert de mode optique optimal (maximum de puissance optique transférée sans réflexion). Pour ce faire des logiciels connus, par exemple et de façon non limitative,Fimmwave^{©}, OptimBPM^{©}, Beamprop^{©}, Lumerical^{©}, peuvent être utilisés pour déterminer la propagation des mode optiques dans les différents guides. Ces logiciels se basent sur des méthodes de calcul connues (par exemple Finite Difference Time Domain FDTD, Beam Propagation Method BPM, Eigen Mode Expension EME). Par exemple, on pourra utiliser des guides d'ondes en pointe tels que décrits dans le chapitre 2 de la thèse de Marco Lamponi [Réf. 6].

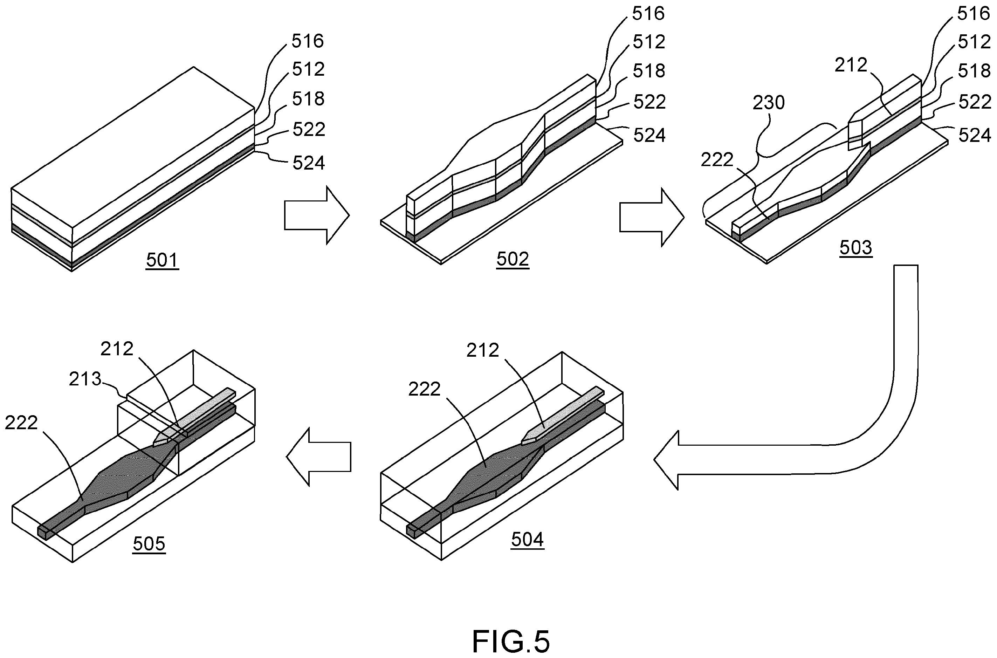

Les composants actif et passif peuvent être fabriquées selon des méthodes classiques dont des exemples sont donnés en référence aux FIGS. 5, 6A - 6C et 7.

L'assemblage est ensuite réalisé comme décrit par exemple en référence à la FIG. 4A. En opération, le couplage entre les guides d'ondes s'opère alors de la manière suivante. Le premier mode optique généré par exemple dans la région active du composant semi-conducteur 200 et guidé dans le premier guide d'onde 212 (section 1 de l'assemblage, FIG. 4A) est transféré par couplage évanescent dans le deuxième guide d'onde 222 (section 2). Ce couplage est contrôlé par le procédé de fabrication et peut être rendu encore plus efficace grâce à la pointe du premier guide d'ondes 212 (éventuellement jusqu'à 0,7µm en lithographie, 0,2µm en technologie e-beam) et la forme de pointe inversée du deuxième guide d'ondes 222. Les formes des pointes peuvent être ajustées par simulation pour un couplage optimal et une tolérance de fabrication, comme décrit précédemment.

Dans une troisième section de l'assemblage (section 3, FIG. 4A), le mode optique reste dans le deuxième guide d'ondes 222. Pour éviter toute réflexion optique, on peut insérer dans l'espace libre entre les composants un milieu d'indice 410 proche de celui du SiO₂ (tel que du BCB par exemple).

Le mode optique est ensuite couplé de manière évanescente (section 4) du deuxième guide d'onde 222 dans le guide d'onde 312 à base de Si (Si, SiO2, SiN...) en utilisant de nouveau des formes (en pointe et/ou en pointe inversée) de guide d'onde optimisées (comme décrit dans [Réf. 6]) puis se propage (section 5) dans le guide d'onde 312 du composant SiPho.

Les deux composants semi-conducteur et SiPho peuvent simplement être en contact de surface, assuré par la pression pendant la soudure du composant semi-conducteur. La distance entre le guide d'onde à base de Si et le deuxième guide d'ondes 222 est contrôlée par l'épaisseur de la gravure dans le composant SiPho et de la couche de recouvrement en SiO₂. En choisissant un guide d'onde à base de Si hautement guidant (contraste d'indice élevé), il est possible d'obtenir une forte attraction modale pour le guide d'onde à base de Si, ce qui permet une tolérance élevée à l'alignement de l'axe des y, et une tolérance totale à l'axe des x en utilisant des pointes assez longues.

La FIG. 4B représente un schéma illustrant selon un exemple, l'évolution des indices effectifs de modes se propageant dans les différents guides d'ondes en fonction des différentes sections de l'assemblage représenté sur la FIG. 4A. Les courbes 401, 403, 405 représentent ainsi respectivement l'indice effectif de mode dans les guides d'ondes 212, 222, 312.

L'indice et la géométrie du premier guide d'ondes 212 dans la section 1 sont définis par la fonction et les performances que l'on souhaite donner par exemple au composant laser ou au circuit InP en amont de la section 1. Dans cette section 1, on cherche à ce que l'indice effectif du mode (donné par un calcul prenant en compte à la fois la géométrie du guide et les indices des matériaux le formant et l'entourant) qui se propage dans le premier guide d'ondes 212 (courbe 401) soit supérieur à l'indice effectif d'un mode optique qui pourrait se propager dans le deuxième guide d'ondes 222 (courbe 403). Cette condition d'indice effectif supérieur dans le premier guide par rapport au deuxième guide d'ondes permet d'assurer que le mode optique se propage uniquement dans le premier guide d'ondes dans la section 1.

Dans la section 2, on fait varier dans cet exemple la géométrie des deux guides d'ondes (diminution de la largeur pour un guide et augmentation de la largeur pour l'autre par exemple) afin de modifier les indices effectifs des modes se propageant dans les guides et de pouvoir à la fin de la section 2 avoir une inversion de la condition précédente. Autrement dit, on cherche à ce que l'indice effectif du mode qui se propage dans le premier guide d'ondes 212 (courbe 401) soit inférieur à l'indice effectif d'un mode optique qui pourrait se propager dans le deuxième guide d'ondes 222 (courbe 403). Cette inversion de condition va permettre de faire un transfert du mode optique du premier guide vers le deuxième guide.

Une fois le transfert de mode effectué à la fin de la section 2, le mode optique va se propager et se stabiliser dans la section 3. Puis dans la section 4, le mode optique est transféré depuis le deuxième guide d'ondes 222 vers le guide d'ondes 312 du composant SiPho.

Une fois le mode optique transféré dans le guide d'ondes 312 à la fin de la section 4, le mode optique va se stabiliser dans la section 5 et va pouvoir se propager dans le reste du composant SiPho.

La Fig. 5 illustre des étapes de fabrication d'un exemple de composant semi-conducteur actif selon un exemple de la présente description.

Une structure comprenant un empilement de couches en matériaux semi-conducteurs est réalisée par croissance épitaxiale sur un substrat 524 (étape 501). L'ensemble de couches comprend par exemple, outre le substrat 524 (par exemple en InP) des couches 522, 512 pour la formation des guides 212 et 222, par exemple en InGaAsP, encapsulées entre des couches 518, 516. En fonction du type de composants actifs désiré, l'homme de l'art utilisera les matériaux nécessaires à l'obtention de la fonctionnalité visée. De manière non exhaustive, des matériaux semi-conducteurs III-V, par exemple GaAs, InP, GaN, avec certains de leurs dérivés ternaires, par exemple InGaAs, InAlAs, InGaP, InGaN, ou dérivés quaternaires, par exemple InGaAsP, InGaAlAs peuvent être utilisés.

Une succession d'étapes de photolithographie, dépôt de diélectriques et gravure de diélectriques et de semiconducteurs permet de définir les deux guides d'ondes (étape 502). Le premier guide d'ondes 212 est ensuite gravé (étape 503) pour créer une pointe nommée convertisseur de mode dans le premier guide d'ondes, ce qui va favoriser le couplage évanescent vers le deuxième guide d' ondes 222, et former une région ouverte 230 sans premier guide d'onde. Une mince couche d'arrêt de gravure à quelques nm au-dessus du deuxième guide d'ondes peut être utilisée pour contrôler la profondeur de cette gravure.

Toute la structure est ensuite enterrée (étape 504) dans un revêtement supérieur (par exemple, de l'InP dopé p dans le cas de formation d'un laser InP). Pour cela, soit la région ouverte 230 est protégée localement pendant la reprise d'épitaxie, soit elle est ouverte par gravure en réutilisant la même couche d'arrêt que pour la première gravure. Enfin la fabrication est finalisée (étape 505), avec les étapes standard de dépôt de plots de métallisation 213 qui serviront ensuite à l'assemblage du composant et à son alimentation électrique. Des étapes de passivation et d'amincissement sont généralement réalisées à la fin de ce process de fabrication.

Dans l'exemple de la FIG. 5, le composant semi-conducteur actif est réalisé selon une technologie de rubans optiques enterrés dans du semi-conducteur. L'invention peut être également être étendue à d'autres types de technologie en fonction des type de technologie semiconducteur utilisée.

Le dopage du composant actif 200 pour former une diode PIN peut être faite de différentes manières connues de l'état de l'art.

Les FIGS. 6A - 6C représente ainsi différents exemples de dopage dans lesquels 601 représente une région dopée N, 602 représente une région dopée P, 603 représente une région non dopée, 604 représente une région isolante électriquement. Les régions dopées P et N sont en contact avec des contacts 213 tels que décrits précédemment.

Plus précisément, les FIGS. 6A - 6C représentent trois schémas possibles d'implémentation d'une hétérostructure de type diode PIN pour le composant actif. La FIG. 6A présente une diode PIN verticale obtenue par technologie classique de type ruban, la FIG. 6B présente une diode PIN verticale obtenue par enterrement du ruban optique et la FIG. 6C une diode PIN latérale obtenue par enterrement d'un ruban optique et implantation ionique pour définir la diode latérale. D'autres configurations de diodes PIN connues de l'homme de l'art peuvent être compatibles avec l'invention et le procédé de fabrication décrit en référence avec la FIG. 5.

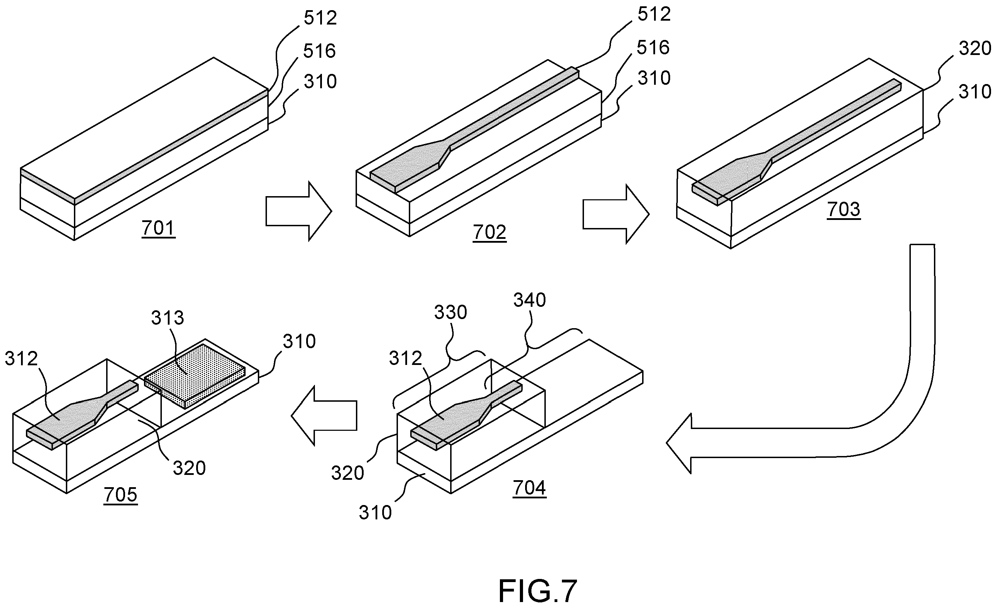

La FIG. 7 illustre des étapes de fabrication d'un exemple de composant passif à base de silicium selon un exemple de la présente description.

Les étapes de fabrication d'un composant SiPho sont standards et peuvent comprendre la formation d'une structure (étape 701) par croissance ou par procédé Smartcut (méthode de fabrication des wafers SOI) sur le substrat 310 en silicium d'une couche 516 en SiO₂ et de la couche 512 destinée à former le guide d'ondes, par exemple une couche en Si. Puis le guide d'ondes en Si est gravé (étape 702) et la structure recouverte d'une couche en SiO₂ (étape 703) pour former l'ensemble de couches 320. Ensuite, une tranchée est gravée (étape 704), formant ainsi deux régions 330, 340, l'ensemble de couches 320 étant localisé dans la région 330. Des plots de contact électrique 313, par exemple des plots de soudure métalliques, sont déposées dans la région 340 sur le substrat 310 (étape 705) pour permettre d'effectuer la soudure et le contact électrique avec le composant semi-conducteur actif.

La Fig. 8 représente un assemblage 800 conforme à la présente description dans un exemple d'implémentation, comprenant un exemple de composant semi-conducteur actif 200 et un exemple de composant passif 300.

Plus précisément, l'assemblage 800 illustre le multiplexage de 4 lasers à des longueurs d'onde différentes pour modulation dans le silicium.

Dans cet exemple, le composant semi-conducteur actif 200 comprend une région à gain optique 802 dans laquelle les premiers guides d'ondes 212 sont configurés pour guider des modes optiques générés par quatre lasers InP émettant aux 4 longueurs d'ondes différentes. Comme la méthode d'assemblage ne nécessite pas de collage moléculaire ou de croissance sur substrat Si du même type que celui décrit dans l'art antérieur en relation avec la figure 1B, le composant semi-conducteur actif peut comprendre d'autres sections actives (par exemples des amplificateurs), des modulateurs et/ou des sections passives, par exemple des photodiodes face arrière InP agencées dans une région 801 de l'assemblage 800, comme illustré sur la FIG. 8. Les références 811 et 812 indiquent les contacts métalliques des photodiodes et laser respectivement. Les photodiodes comprennent tout l'empilement semiconducteur se situant sous le métal 811 ainsi que le métal 811 et le laser comprend tout l'empilement semiconducteur se situant sous le métal 812 ainsi que le métal 812. Le composant passif 300 comprend dans cet exemple un multiplexeur 814 dans une région 804 de l'assemblage connecté à un modulateur 815 dans une région 805 de l'assemblage, par exemple un modulateur de Mach-Zehnder.

La région 803 de l'assemblage correspond à une région de couplage telle que décrite plus en détails au moyen des FIGS 4A, 4B. Notamment, on y observe le couplage évanescent entre les deuxièmes guides d'onde 222 du composant actif 200 et les guides d'ondes 312 du composant passif reliés au multiplexeur 814.

Bien entendu, l'exemple d'assemblage illustré sur la FIG. 8 n'est pas limitatif et d'autres exemples peuvent être donnés qui utilise un ou plusieurs assemblages connectés les uns à la suite des autres. Par exemple :
- l'émission de 2 lasers à polarisation orthogonale dans le composant actif et combinaison des deux polarisations dans le silicium et transfert vers une fibre optique à l'aide d'un coupleur vertical ;
- le couplage d'un laser externe multi-longueurs d'onde émettant un peigne de fréquences, démultiplexage dans un composant passif, modulation des différentes longueurs d'onde dans une barrette de modulateurs à électro-absorption dans un composant actif, multiplexage dans un second composant passif ;
- section à gain dans un composant actif, couplé avec un filtre sélectif accordable à base d'anneaux ou de Mach-Zehnder dans le composant passif pour créer une cavité laser accordable en longueur d'onde ;
- émission dans un premier composant actif de 4 lasers avec différentes longueurs d'onde, multiplexage et modulation Mach Zehnder, démultiplexage dans un composant passif et photodétection dans un second composant actif.

Bien que décrite à travers un certain nombre d'exemples de réalisation, l'assemblage et le procédé de couplage décrits dans la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

### Références

Réf. 1. K. Janiak et al., "1.55 µm BH-DFB laser with integrated spot-size converter for flip-chip applications" 16th IPRM. 2004 International Conference on Indium Phosphide and Related Materials, 2004., Kagoshima, 2004, pp. 476-479.
Réf. 2. Yamada, Hirohito. "Analysis of Optical Coupling for SOI Waveguides." Piers Online, vol. 6, No. 2, 2010.
Réf. 3. Y. Gao et al., "Hybrid Integration With Efficient Ball Lens-Based Optical Coupling for Compact WDM Transmitters" in IEEE Photonics Technology Letters, vol. 28, no. 22, pp. 2549-2552, 15 Nov.15, 2016.
Réf. 4. G. Duan et al., "Hybrid III--V on Silicon Lasers for Photonic Integrated Circuits on Silicon" in IEEE Journal of Selected Topics in Quantum Electronics, vol. 20, no. 4, pp. 158-170, July-Aug. 2014, Art no. 6100213.
Réf. 5. Demande de brevet publiée US2013/0195137A1.
Réf. 6. Marco Lamponi, "Hybrid III-V on silicon lasers for telecommunication applications", PhD Thesis, Chapter 2, 2012.
Réf. 7 : Demande de brevet publiée WO2016077499

## Revendications

1. Assemblage (400) d'un composant semi-conducteur actif (200) et d'un composant optique passif (300) à base de silicium, ledit assemblage comprenant :
un support ;
ledit composant semi-conducteur actif (200) et ledit composant optique passif (300) agencés sur ledit support,
ledit composant semi-conducteur actif (200) comprend :
un premier ensemble de couches (210) en matériaux semi-conducteurs comprenant au moins un premier guide d'ondes (212) configuré pour guider, dans une première section (1) de l'assemblage, au moins un premier mode optique, ledit premier guide d'onde (212) étant formé en un matériau semi-conducteur choisi parmi les dérivés ternaires ou quaternaires du GaAs, de l'InP ou du GaN;
un deuxième ensemble de couches (220) en matériaux semi-conducteurs, superposé et en contact avec ledit premier ensemble de couches, et comprenant au moins un deuxième guide d'ondes (222) configuré pour guider au moins un deuxième mode optique, ledit deuxième guide d'onde (222) étant formé en un matériau semi-conducteur choisi parmi les dérivés ternaires ou quaternaires du GaAs, de l'InP ou du GaN; dans lequel
au moins une partie desdites couches du premier ensemble de couches et du deuxième ensemble de couches sont dopées pour former dans une première région du composant (240) une diode de type PIN ;
ledit au moins un premier guide d'onde (212) et ledit au moins un deuxième guide d'ondes (222) sont configurés pour permettre un couplage évanescent entre eux, dans une deuxième section (2) de l'assemblage;
ledit premier ensemble de couches est gravé pour former dans une deuxième région (230) du composant semi-conducteur actif (200) une première surface (231) affleurant ledit deuxième guide d'ondes (222);
ledit composant passif comprend :
un substrat (310);
un ensemble de couches (320) en matériaux composés du silicium comprenant au moins un guide d'ondes (312) configuré pour guider au moins un mode optique; et dans lequel :
ledit au moins un guide d'onde (312) affleure une première surface (321) dudit ensemble de couches (320) opposée à une deuxième surface (322) dudit ensemble de couches en contact avec une surface (311) du substrat; et dans lequel
ladite première surface (321) du composant optique passif est en contact avec ladite première surface (231) dudit composant semi-conducteur actif (200) pour permettre un couplage évanescent entre ledit au moins un guide d'onde (312) du composant optique passif et ledit au moins un deuxième guide d'onde (222) dudit composant semi-conducteur actif.

2. Assemblage selon la revendication 1, dans lequel le support de l'assemblage est formé par ledit substrat (310) du composant optique passif.

3. Assemblage selon la revendication 2, dans lequel :
le substrat (310) dudit composant passif comprend une première région (330) sur laquelle est agencé ledit ensemble de couches (320) et une deuxième région (340) sur laquelle est agencé au moins un plot de contact électrique (313);
ledit composant semi-conducteur actif comprend au moins un plot de contact électrique (213) en contact avec ledit premier ensemble de couches (210) en matériau semi-conducteur ;
ledit composant semi-conducteur actif est fixé sur ledit substrat (310) du composant optique passif de telle sorte que ledit plot de contact électrique (313) du composant passif soit en contact avec ledit plot de contact électrique (213) du composant semi-conducteur actif.

4. Assemblage selon l'une quelconque des revendications précédentes, dans lequel les géométries desdits au moins un premier guide d'onde et au moins un deuxième guide d'onde du composant semi-conducteur actif sont configurées de telle sorte qu'un indice effectif dudit au moins un premier mode optique soit strictement supérieur à un indice effectif dudit au moins un deuxième mode optique dans la première section de l'assemblage et que ledit indice effectif dudit au moins un premier mode optique devienne strictement inférieur à l'indice effectif dudit au moins un deuxième mode optique dans la deuxième section de l'assemblage.

5. Assemblage selon l'une quelconque des revendications précédentes, dans lequel une distance entre ledit au moins un deuxième guide d'onde et ladite première surface (231) du composant semi-conducteur actif est comprise entre 0 et environ 1 µm.

6. Assemblage selon l'une quelconque des revendications précédentes, dans lequel une distance entre ledit au moins un guide d'onde et ladite première surface (321) du composant optique passif est comprise entre 0 et environ 1 µm.

7. Assemblage selon l'une quelconque des revendications précédentes, dans lequel les couches en matériaux semi-conducteurs du premier ensemble de couches du composant semi-conducteur actif sont configurées pour générer une ou plusieurs fonctions optiques choisies parmi : l'amplification optique, l'émission laser, la modulation de phase, la modulation à électro-absorption, la photodétection.

8. Assemblage selon l'une quelconque des revendications précédentes, dans lequel les couches de l'ensemble de couches du composant optique passif sont configurées pour générer une ou plusieurs desdits fonctions suivantes : multiplexage en longueur d'onde, multiplexage en polarisation, filtrage, modulation, photodétection, combinaison ou division de faisceau, routage.

9. Assemblage selon l'une quelconque des revendications précédentes, dans lequel :
le composant optique passif comprend une pluralité de N guides d'ondes disposés parallèlement, où N est un entier supérieur ou égal à 2;
le composant semi-conducteur actif comprend une pluralité de N premiers guides d'ondes et une pluralité de N deuxièmes guides d'ondes, lesdits premiers guides d'ondes et lesdits deuxièmes guides d'ondes étant disposés parallèlement, et dans lequel :
en opération, chaque premier guide d'onde du composant semi-conducteur actif est couplé, par couplage évanescent, avec un deuxième guide d'onde du composant semi-conducteur actif, ledit deuxième guide d'onde du composant semi-conducteur actif étant couplé, par couplage évanescent, avec un guide d'onde du composant optique passif.

10. Procédé de couplage entre guides d'ondes dans un assemblage selon l'une quelconque des revendications précédentes, comprenant :
dans ladite première section (1) de l'assemblage la propagation d'au moins un mode optique dans ledit au moins un premier guide d'onde (212) du composant actif ;
dans ladite deuxième section (2) de l'assemblage, le transfert, par couplage évanescent, dudit au moins un mode optique dans ledit au moins un deuxième guide d'onde (222) du composant actif;
dans une troisième section (3) de l'assemblage, la propagation dudit au moins un mode optique dans ledit au moins un deuxième guide d'onde (222) du composant actif ;
dans une quatrième section (4) de l'assemblage le transfert, par couplage évanescent, dudit au moins un mode optique dans ledit au moins un guide d'onde (312) du composant passif ;
dans une cinquième section (5) de l'assemblage la propagation dudit au moins un mode optique dans ledit au moins un guide d'onde (312) du composant passif.

11. Procédé de fabrication d'un assemblage selon l'une quelconque des revendications 1 à 9, comprenant :
la fourniture dudit composant semi-conducteur actif (200);
la fourniture dudit composant passif (300) à base de silicium;
l'assemblage dudit composant semi-conducteur actif (200) et dudit composant passif (300) par mise en contact de ladite première surface (321) dudit ensemble de couches (320) du composant passif (300) avec ladite première surface (231) du composant semi-conducteur actif (200).

12. Procédé de fabrication d'un assemblage selon la revendication 11, dans lequel :
le substrat (310) dudit composant passif comprend une première région (330) sur laquelle est agencé ledit ensemble de couches (320) et une deuxième région (340) sur laquelle est agencé au moins un plot de contact électrique (313);
ledit composant semi-conducteur actif comprend au moins un plot de contact électrique (213) en contact avec ledit premier ensemble de couches (210) en matériau semi-conducteur ; et dans lequel :
l'assemblage dudit composant semi-conducteur actif (200) et dudit composant passif (300) comprend la mise en contact dudit plot de contact électrique (313) du composant optique passif et dudit plot de contact électrique (213) du composant semi-conducteur actif.

13. Procédé de fabrication d'un assemblage selon la revendication 12, dans lequel lesdits plots de contact électriques (313, 213) du composant optique passif et du composant semi-conducteur actif sont des plots métalliques et l'assemblage comprend la fixation dudit composant semi-conducteur actif (200) et dudit composant passif (300) par soudure ou collage desdits plots.

## Patentansprüche

1. Verbund (400) aus einer aktiven halbleitenden Komponente (200) und einer passiven optischen Komponente (300) auf Siliciumbasis, der Verbund umfassend:
einen Träger;
die aktive halbleitende Komponente (200) und die passive optische Komponente (300), die auf dem Träger angeordnet sind,
wobei die aktive halbleitende Komponente (200) umfasst:
eine erste Anordnung von Schichten (210) aus halbleitenden Materialien, umfassend mindestens einen ersten Wellenleiter (212), der dazu ausgestaltet ist, in einem ersten Abschnitt (1) des Verbunds mindestens eine erste optische Mode zu leiten, wobei der erste Wellenleiter (212) aus einem halbleitenden Material gebildet ist, das aus den ternären oder quaternären Derivaten von GaAs, InP oder GaN gewählt ist;
eine zweite Anordnung von Schichten (220) aus halbleitenden Materialien, die mit der ersten Anordnung von Schichten gestapelt und in Kontakt ist und mindestens einen zweiten Wellenleiter (222) umfasst, der dazu ausgestaltet ist, mindestens eine zweite optische Mode zu leiten, wobei der zweite Wellenleiter (222) aus einem halbleitenden Material gebildet ist, das aus den ternären oder quaternären Derivaten von GaAs, InP oder GaN gewählt ist; wobei
mindestens ein Teil der Schichten der ersten Anordnung von Schichten und der zweiten Anordnung von Schichten dotiert ist, um in einer ersten Region der Komponente (240) eine PIN-Diode zu bilden;
der mindestens eine erste Wellenleiter (212) und der mindestens eine zweite Wellenleiter (222) dazu ausgestaltet sind, eine evaneszente Kopplung zwischen sich in einem zweiten Abschnitt (2) des Verbunds zu ermöglichen;
die erste Anordnung von Schichten geätzt ist, um in einer zweiten Region (230) der aktiven halbleitenden Komponente (200) eine erste Fläche (231) zu bilden, die an dem zweiten Wellenleiter (222) anliegt;
wobei die passive Komponente umfasst:
ein Substrat (310);
eine Anordnung von Schichten (320) aus Siliciumverbundmaterialien, umfassend mindestens einen Wellenleiter (312), der dazu ausgestaltet ist, mindestens eine optische Mode zu leiten, und wobei:
der mindestens eine Wellenleiter (312) an einer ersten Fläche (321) der Anordnung von Schichten (320) anliegt, die entgegengesetzt zu einer zweiten Fläche (322) der Anordnung von Schichten ist, die in Kontakt mit einer Fläche (311) des Substrats ist; und wobei
die erste Fläche (321) der passiven optischen Komponente in Kontakt mit der ersten Fläche (231) der aktiven halbleitenden Komponente (200) ist, um eine evaneszente Kopplung zwischen dem mindestens einen Wellenleiter (312) der passiven optischen Komponente und dem mindestens einen zweiten Wellenleiter (222) der aktiven halbleitenden Komponente zu ermöglichen.

2. Verbund nach Anspruch 1, wobei der Träger des Verbunds durch das Substrat (310) der passiven optischen Komponente gebildet wird.

3. Verbund nach Anspruch 2, wobei:
das Substrat (310) der passiven Komponente eine erste Region (330) umfasst, auf der die Anordnung von Schichten (320) angeordnet ist, und eine zweite Region (340), auf der mindestens ein elektrisches Kontaktpad (313) angeordnet ist;
die aktive halbleitende Komponente mindestens ein elektrisches Kontaktpad (213) in Kontakt mit der ersten Anordnung von Schichten (210) aus halbleitendem Material umfasst;
die aktive halbleitende Komponente auf dem Substrat (310) der passiven optischen Komponente so befestigt ist, dass das elektrische Kontaktpad (313) der passiven Komponente in Kontakt mit dem elektrischen Kontaktpad (213) der aktiven halbleitenden Komponente ist.

4. Verbund nach einem der vorhergehenden Ansprüche, wobei die Geometrien des mindestens einen ersten Wellenleiters und des mindestens einen zweiten Wellenleiters der aktiven halbleitenden Komponente so ausgestaltet sind, dass ein effektiver Index der mindestens einen ersten optischen Mode strikt größer als ein effektiver Index der mindestens einen zweiten optischen Mode in dem ersten Abschnitt des Verbunds ist und dass der effektive Index der mindestens einen ersten optischen Mode strikt kleiner als der effektive Index der mindestens einen zweiten optischen Mode in dem zweiten Abschnitt des Verbunds wird.

5. Verbund nach einem der vorhergehenden Ansprüche, wobei ein Abstand zwischen dem mindestens einen zweiten Wellenleiter und der ersten Fläche (231) der aktiven halbleitenden Komponente zwischen 0 und etwa 1 µm beträgt.

6. Verbund nach einem der vorhergehenden Ansprüche, wobei ein Abstand zwischen dem mindestens einen Wellenleiter und der ersten Fläche (321) der passiven optischen Komponente zwischen 0 und etwa 1 µm beträgt.

7. Verbund nach einem der vorhergehenden Ansprüche, wobei die Schichten aus halbleitenden Materialien der ersten Anordnung von Schichten der aktiven halbleitenden Komponente dazu ausgestaltet sind, eine oder mehrere optische Funktionen zu erzeugen, die gewählt sind aus: optischer Verstärkung, Laseremission, Phasenmodulation, Elektroabsorptionsmodulation, Photodetektion.

8. Verbund nach einem der vorhergehenden Ansprüche, wobei die Schichten der Anordnung von Schichten der passiven optischen Komponente dazu ausgestaltet sind, eine oder mehrere der folgenden Funktionen zu erzeugen: Wellenlängenmultiplex, Polarisationsmultiplex, Filtern, Modulation, Photodetektion, Strahlkombination oder - teilung, Routing.

9. Verbund nach einem der vorhergehenden Ansprüche, wobei:
die passive optische Komponente eine Mehrzahl von N parallel angeordneten Wellenleitern umfasst, wobei N eine ganze Zahl größer oder gleich 2 ist;
die aktive halbleitende Komponente eine Mehrzahl von N ersten Wellenleitern und eine Mehrzahl von N zweiten Wellenleitern umfasst, wobei die ersten Wellenleiter und die zweiten Wellenleiter parallel angeordnet sind, und wobei:
im Betrieb jeder erste Wellenleiter der aktiven halbleitenden Komponente durch evaneszente Kopplung mit einem zweiten Wellenleiter der aktiven halbleitenden Komponente gekoppelt ist, wobei der zweite Wellenleiter der aktiven halbleitenden Komponente durch evaneszente Kopplung mit einem Wellenleiter der passiven optischen Komponente gekoppelt ist.

10. Verfahren zur Kopplung zwischen Wellenleitern in einem Verbund nach einem der vorhergehenden Ansprüche, umfassend:
in dem ersten Abschnitt (1) des Verbunds die Ausbreitung mindestens einer optischen Mode in dem mindestens einen ersten Wellenleiter (212) der aktiven Komponente;
in dem zweiten Abschnitt (2) des Verbunds den Transfer, durch evaneszente Kopplung, der mindestens einen optischen Mode in den mindestens einen zweiten Wellenleiter (222) der aktiven Komponente;
in einem dritten Abschnitt (3) des Verbunds die Ausbreitung der mindestens einen optischen Mode in dem mindestens einen zweiten Wellenleiter (222) der aktiven Komponente;
in einem vierten Abschnitt (4) des Verbunds den Transfer, durch evaneszente Kopplung, der mindestens einen optischen Mode in den mindestens einen Wellenleiter (312) der passiven Komponente;
in einem fünften Abschnitt (5) des Verbunds die Ausbreitung der mindestens einen optischen Mode in dem mindestens einen Wellenleiter (312) der passiven Komponente.

11. Verfahren zur Herstellung eines Verbunds nach einem der Ansprüche 1 bis 9, umfassend:
das Bereitstellen der aktiven halbleitenden Komponente (200);
das Bereitstellen der passiven Komponente (300) auf Siliciumbasis;
das Verbinden der aktiven halbleitenden Komponente (200) und der passiven Komponente (300) durch Kontaktieren der ersten Fläche (321) der Anordnung von Schichten (320) der passiven Komponente (300) mit der ersten Fläche (231) der aktiven halbleitenden Komponente (200).

12. Verfahren zur Herstellung eines Verbunds nach Anspruch 11, wobei:
das Substrat (310) der passiven Komponente eine erste Region (330) umfasst, auf der die Anordnung von Schichten (320) angeordnet ist, und eine zweite Region (340), auf der mindestens ein elektrisches Kontaktpad (313) angeordnet ist;
die aktive halbleitende Komponente mindestens ein elektrisches Kontaktpad (213) in Kontakt mit der ersten Anordnung von Schichten (210) aus halbleitendem Material umfasst; und wobei:
das Verbinden der aktiven halbleitenden Komponente (200) und der passiven Komponente (300) das Kontaktieren des elektrischen Kontaktpads (313) der passiven optischen Komponente und des elektrischen Kontaktpads (213) der aktiven halbleitenden Komponente umfasst.

13. Verfahren zur Herstellung eines Verbunds nach Anspruch 12, wobei die elektrischen Kontaktpads (313, 213) der passiven optischen Komponente und der aktiven halbleitenden Komponente metallische Pads sind und das Verbinden das Befestigen der aktiven halbleitenden Komponente (200) und der passiven optischen Komponente (300) durch Schweißen oder Kleben der Pads umfasst.

## Claims

1. An assembly (400) of an active semiconductor component (200) and of a silicon-based passive optical component (300), said assembly comprising:
a carrier;
said active semiconductor component (200) and said passive optical component (300) both arranged on said carrier,
wherein said active semiconductor component (200) comprises:
a first set (210) of semiconductor layers comprising at least one first waveguide (212) configured to guide, in a first section (1) of the assembly, at least one first optical mode, said first waveguide (212) being made of a semiconductor material selected from ternary or quaternary derivatives of GaAs, InP, or GaN.;
a second set (220) of semiconductor layers, said set being superposed and contacting said first set of layers, and comprising at least one second waveguide (222) configured to guide at least one second optical mode, said second waveguide (222) being made of a semiconductor material selected from ternary or quaternary derivatives of GaAs, InP, or GaN; wherein
at least some of said layers of the first set of layers and of the second set of layers are doped to form, in a first region (240) of the component, a PIN diode;
said at least one first waveguide (212) and said at least one second waveguide (222) are configured to allow evanescent coupling therebetween, in a second section (2) of the assembly;
said first set of layers is etched to form, in a second region (230) of the active semiconductor component (200), a first surface (231) flush with said second waveguide (222);
wherein said passive component comprises:
a substrate (310);
a set (320) of silicon-compound layers comprising at least one waveguide (312) configured to guide at least one optical mode; and wherein:
said at least one waveguide (312) lies flush with a first surface (321) of said set (320) of layers, which surface is opposite a second surface (322) of said set of layers contacting a surface (311) of the substrate; and wherein
said first surface (321) of the passive optical component contacts said first surface (231) of said active semiconductor component (200) in order to allow evanescent coupling between said at least one waveguide (312) of the passive optical component and said at least one second waveguide (222) of said active semiconductor component.

2. The assembly as claimed in claim 1, wherein the carrier of the assembly is formed by said substrate (310) of the passive optical component.

3. The assembly as claimed in claim 2, wherein:
the substrate (310) of said passive component comprises a first region (330) in which is arranged said set (320) of layers, and a second region (340) in which is arranged at least one electrical contact pad (313);
said active semiconductor component comprises at least one electrical contact pad (213) contacting said first set (210) of semiconductor layers;
said active semiconductor component is fastened to said substrate (310) of the passive optical component in such a way that said electrical contact pad (313) of the passive component contacts said electrical contact pad (213) of the active semiconductor component.

4. The assembly as claimed in any one of the preceding claims, wherein the geometries of said at least one first waveguide and at least one second waveguide of the active semiconductor component are configured such that an effective index of said at least one first optical mode is strictly higher than an effective index of said at least one second optical mode in the first section of the assembly and such that said effective index of said at least one first optical mode becomes strictly lower than the effective index of said at least one second optical mode in the second section of the assembly.

5. The assembly as claimed in any one of the preceding claims, wherein a distance between said at least one second waveguide and said first surface (231) of the active semiconductor component is comprised between 0 and about 1 µm.

6. The assembly as claimed in any one of the preceding claims, wherein a distance between said at least one waveguide and said first surface (321) of the passive optical component is comprised between 0 and about 1 µm.

7. The assembly as claimed in any one of the preceding claims, wherein the semiconductor layers of the first set of layers of the active semiconductor component are configured to perform one or more optical functions chosen from: optical amplification, laser emission, phase modulation, electro-absorption modulation, and photodetection.

8. The assembly as claimed in any one of the preceding claims, wherein the layers of the set of layers of the passive optical component are configured to perform one or more of the following functions: wavelength multiplexing, polarization multiplexing, filtering, modulation, photodetection, beam combining or splitting, and routing.

9. The assembly as claimed in any one of the preceding claims, wherein:
the passive optical component comprises a plurality of N waveguides placed in parallel, where N is an integer higher than or equal to 2;
the active semiconductor component comprises a plurality of N first waveguides and a plurality of N second waveguides, said first waveguides and said second waveguides being placed in parallel, and wherein:
in operation, each first waveguide of the active semiconductor component is coupled, by evanescent coupling, to a second waveguide of the active semiconductor component, said second waveguide of the active semiconductor component being coupled, by evanescent coupling, to a waveguide of the passive optical component.

10. A method for coupling waveguides in an assembly as claimed in any one of the preceding claims, comprising:
in said first section (1) of the assembly, propagating at least one optical mode through said at least one first waveguide (212) of the active component;
in said second section (2) of the assembly, transferring, by evanescent coupling, said at least one optical mode to said at least one second waveguide (222) of the active component;
in a third section (3) of the assembly, propagating said at least one optical mode through said at least one second waveguide (222) of the active component;
in a fourth section (4) of the assembly, transferring, by evanescent coupling, said at least one optical mode to said at least one waveguide (312) of the passive component;
in a fifth section (5) of the assembly, propagating said at least one optical mode through said at least one waveguide (312) of the passive component.

11. A process for fabricating an assembly as claimed in any one of claims 1 to 9, comprising:
providing said active semiconductor component (200);
providing said silicon-based passive component (300);
assembling said active semiconductor component (200) and said passive component (300) by placing said first surface (321) of said set (320) of layers of the passive component (300) in contact with said first surface (231) of the active semiconductor component (200).

12. The process for fabricating an assembly as claimed in claim 11, wherein:
the substrate (310) of said passive component comprises a first region (330) in which is arranged said set (320) of layers and a second region (340) in which is arranged at least one electrical contact pad (313);
said active semiconductor component comprises at least one electrical contact pad (213) contacting said first set (210) of semiconductor layers; and wherein:
assembling said active semiconductor component (200) and said passive component (300) comprises placing said electrical contact pad (313) of the passive optical component in contact with said electrical contact pad (213) of the active semiconductor component.

13. The process for fabricating an assembly as claimed in claim 12, wherein said electrical contact pads (313, 213) of the passive optical component and of the active semiconductor component are metal pads and assembling comprises fastening said active semiconductor component (200) and said passive component (300) by soldering or bonding said pads.
